# EUROPEAN PATENT SPECIFICATION

(11) **EP 1 077 175 B1**
(45) Date of publication and mention of the grant of the patent: **21.04.2004**
(21) Application number: 00850123.1
(22) Date of filing: 06.07.2000
(51) Int. Cl.: B62K 25/08

(54) **Telescopic fork arrangement**
Teleskopische Gabelanordnung
Arrangement de fourche téléscopique

(30) Priority: 19.08.1999 SE 9902944
(43) Date of publication of application: 21.02.2001
(73) Proprietor: ÖHLINS RACING AB, 194 27 Upplands Väsby (SE)
(72) Inventor: Larsson, Mats, 194 56 Upplands Väsby (SE); Löfgren, Oscar, 171 71 Solna (SE)
(74) Representative: Karlsson, Berne

(56) References cited:
- US-A- 4 786 037

## Description

### TECHNICAL FIELD

The present invention relates to a telescopic fork arrangement for the front wheel of vehicles, in particular of motorcycles. The arrangement comprises at least two telescopic legs, each having telescopically arranged tubes and, arranged in these, piston and piston-rod arrangements operating in a working medium which can be of a type known per se, preferably in the form of hydraulic oil.

### PRIOR ART

It is already known to use telescopic fork arrangements with two fork legs, where each leg is made up of telescopically arranged tubes and where a piston rod is fixed at one end of the leg and extends inside one or more outer tubes and supports, at its other end, a piston which is intended to be displaceable in an inner tube. A front wheel is mounted on the said outer tube at the end of the leg, and the inner tube is mounted on a bearing part which in turn is fixed in a chassis of the vehicle/motorcycle. The structure of the leg and tube arrangement can vary. A characteristic of telescopic legs of the type in question is also that a mechanical main spring is arranged in or near the tubes.

In connection with the piston, a working medium is arranged inside the tube in question. The piston operates in this working medium to effect the damping function. A channel system is usually provided outside the piston in the tube arrangement, which channel system permits delivery and return of the working medium as the piston moves as a function of spring movements. The channel system is routed through a control valve arrangement, by means of which the damping characteristic for the leg can be determined. The control valve arrangement can in this case be designed for adjusting the damping characteristics from outside using manually activated members. The channel system also allows medium to appear on both sides of the piston and for it to be exposed to atmospheric pressure at the upper side of the piston.

It is also already known to arrange telescopic fork legs for pressurizing the working medium in question. In this connection, reference may be made, inter alia, to EP 208,740 or its family member US-A-4,786,037.

### DESCRIPTION OF THE INVENTION

### TECHNICAL PROBLEM

In telescopic fork legs with non-pressurized working medium, the effects of cavitation and foam formation mean that there is no damping, or very poor damping, at high frequencies, for example frequencies of between 15 and 25 Hz, which can arise from tyre vibrations, driving on certain road surfaces, etc. To increase the safety of road racing, for example, there is a need for telescopic fork arrangements which are also able to damp such high frequencies. The invention aims to solve this problem, among others.

The invention is based on the recognition that advantages are to be gained in this connection from using a pressurized working medium space, and that there is a need to be able to provide such a space which can function efficiently in different contexts for specialized and standard motorcycles. The invention solves this problem too.

Using pressurized systems for the working medium in order to solve the problem of effective high-frequency damping is not obvious in this context. In arrangements of the type in question, a pressurized system means that friction caused by piston rod seal or piston rod seals increases, which in turn has placed demands on the piston rod diameter having to be reduced. Since the surface area of the piston rod has hitherto constituted the factor for displacement upon movement of the piston, this has meant that the displacement has reduced upon each movement. This in turn has meant that the piston/piston-rod had to execute a relatively long movement on each damping, which resulted in an adverse, substantial hysteresis function and failed damping effect at high-frequency movements. The invention solves this problem too and allows the disadvantage of increased friction on account of pressurized working medium to be counteracted by great displacement with relatively small piston-rod and piston movements.

In the case of telescopic fork arrangements with legs which operate/damp essentially only in one direction, there is a need to be able to propose structures which allow marked function differences for the two directions. The invention solves this problem too.

There is also a requirement for the setting functions to be able to be activated manually in a technically simple manner. The invention aims to solve this problem too.

### SOLUTION

The feature which can principally be regarded as characterizing a telescopic fork arrangement is that a first telescopic leg, hereinafter called the compression leg, of the said legs performs a damping function essentially only during its compression movement, i.e. no real damping function is performed by the leg during its return movement. Further characteristics are that a second telescopic leg, hereinafter called the return leg, of the said telescopic legs performs a damping function essentially only during its return movement. This means that the return leg does not perform or does not effect any real damping during its return movement. Further characteristics are that at least one of the said compression or return legs is connected to a pressure chamber unit which, in a closed system for the working medium, formed with the respective leg in question, keeps this working medium pressurized, and that a piston in the piston/piston-rod arrangement is provided with or cooperates with one or more members which perform or determine respective damping functions.

In further developments of the invention, the displacement in the pressurized medium upon each piston and piston-rod movement is dependent on or related to the surface areas of the piston. The increased friction caused by the pressurized medium (compared to the case with non-pressurized medium) is compensated by increased displacement generated by the piston/piston area instead of the piston rod/piston-rod area.

In one embodiment, the compression leg can comprise a check valve unit for a bleed adjustment function. The check valve can be activated for or at low media speeds in the bleed adjustment function on the compression stroke. The piston of the compression leg can in this case have, on its upper side, first media-activating members, preferably in the form of first shims, which it is particularly advantageous to use in this context. The member or the first shims have a stiff character, permitting media passage at high speeds on the compression stroke. The piston in question also has a first check valve function, preferably obtained with the aid of second shims arranged on the underside of the piston. The said first check valve function opens for media at low pressure on the return stroke of the compression leg. The first check valve function/the second shims are of weak character, and the said stiff and weak characters of the first and second shims are chosen to provide a marked difference in damping between the compression stroke and return stroke of the compression leg. This marked difference permits simplified adjustability for low-speed compression damping. The said check valve unit prevents media passage in the bleed adjustment function on the return stroke of the compression leg.

In a preferred embodiment, the return leg comprises a bleed adjustment function permitting media passage at low media speeds on the return stroke of the return leg. The piston of the return leg has, on its underside, second media-activating members, preferably third shims which are of stiff character in order to permit media at high speeds on the return stroke. The last-mentioned piston has a second check valve function, preferably in the form of fourth shims arranged on the upper side of the piston and arranged to open for media at low pressure on the compression stroke of the return leg. The said second check valve function/fourth shims are of weak character. The stiff and weak characters of the third and fourth shims (the second check valve function) provide a marked difference in damping between the return stroke and compression stroke of the return leg. The said marked difference is chosen to facilitate adjustment of the low-speed return damping from outside by means of manually activated members. The bleed adjustment function allows a negligible part of the medium to pass on the compression stroke of the return leg.

In one embodiment, the piston of the compression leg consists of parts which can be joined together and comprise a first piston body part with axially extending through-holes. Also included are first and second shims which can be applied directly on the ends of the piston body part, and a combined connection and bearing part for the piston body part and a first bearing housing for internal bearing of front parts of a first element effecting the bleed adjustment function.

In a further embodiment, the piston of the return leg consists of parts which can be joined together and comprise a second piston body part with axially extending through-holes, third and fourth shims which can be applied directly on the ends of the piston body part, and a second combined connection and bearing part for, inter alia, internal bearing of front parts of a second element effecting the bleed adjustment function. The first and second bearing parts extend a distance into an axial central recess in each of the first and second piston body parts.

The above features mean that the compression and return legs can effect damping of high frequencies, for example frequencies of between 15 and 25 Hz caused, for example, by vibrations from tyres, road surface, etc. Each leg is connected to an accumulator unit which is held in the chamber and which operates with gas/nitrogen gas and separator piston between the working medium and the gas/nitrogen gas. A control valve is preferably arranged between the spaces for the working medium and the gas/separator piston. The said bleed function or bleed functions can be adjusted from one of the ends of the legs by means of manually activated members which mean that the adjustment can be effected from the outside. The control valve can be controlled from a unit containing the control valve for adjustment of the compression against which the piston/piston-rod arrangement presses. The response of the damping function is accelerated by the fact that the displacement and force thereof are related to or applied to the piston/piston area.

### ADVANTAGES

By means of what has been proposed above, a telescopic fork damping is obtained which is effective even against high frequencies. The proposed arrangement has a relatively simple structure and makes it possible to counter the effects of high frictional forces arising in the arrangement as a result of pressurized working medium being used. The structure is extremely simple, and structural components which are known per se in this technical field can largely be used. The arrangement can be fitted on special and standard motorcycles and could conceivably be used on, for example, three-wheeled vehicles.

### DESCRIPTION OF THE FIGURES

A presently proposed embodiment of a telescopic fork arrangement according to the invention will be described below with reference to the attached drawings, in which:
Figure 1, in a perspective view obliquely from underneath and from front right, shows parts of a motorcycle with a telescopic fork arrangement for the front wheel,
Figures 2 and 3 together show, in longitudinal section, an illustrative embodiment of the structure of a telescopic fork leg consisting of a basic design to which components can be added to form compression leg and return leg, these figures specifically showing the design of the compression leg,
Figures 4 and 5 show, in longitudinal section, parts of the compression leg according to Figure 2, on an enlarged scale, and
Figures 6 and 7 show, in longitudinal section, the basic design of the telescopic leg which has been provided with components forming a return leg.

### DETAILED EMBODIMENT

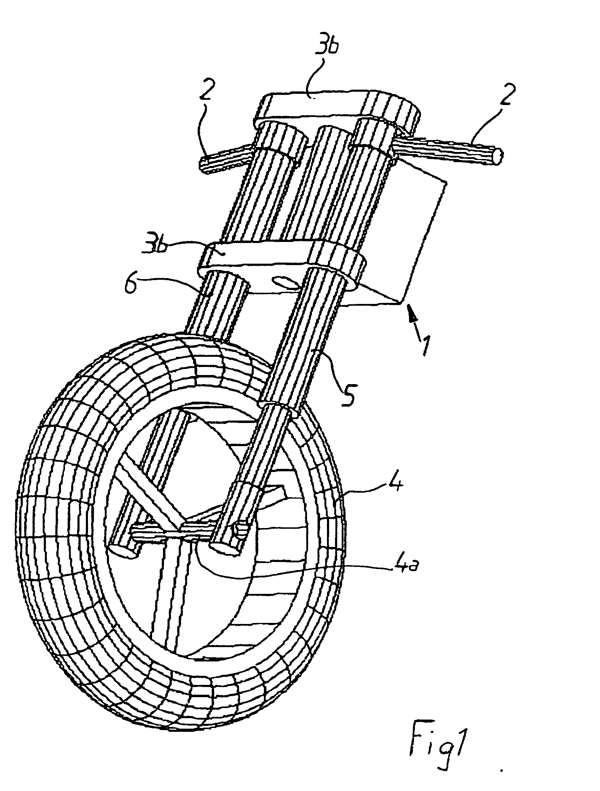

In Figure 1, parts of a motorcycle (e.g. for road racing) are represented by way of a symbolically depicted chassis 1, handle-bars 2 and telescopic fork arrangement 3 supporting a front wheel 4 of the motorcycle. The arrangement 3 comprises two telescopic legs 5 and 6 which are outwardly designed and secured to the chassis in a manner known per se. One characteristic feature of the invention, among others, is that one leg, for example leg 5, provides damping essentially only in its compression direction, i.e. no real damping takes place in the return direction of the leg, while the second leg, for example leg 6, provides damping essentially only in the return direction, i.e. no damping takes place in the compression direction of the leg.

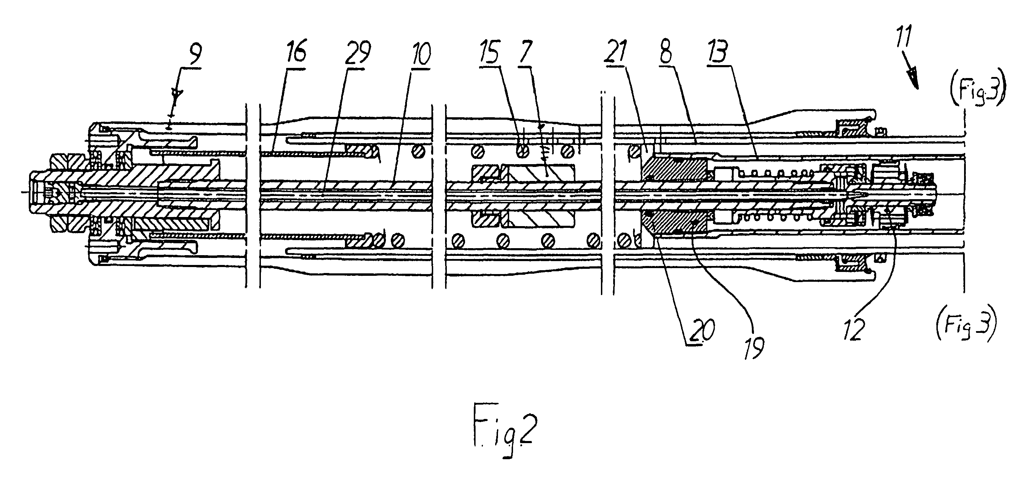

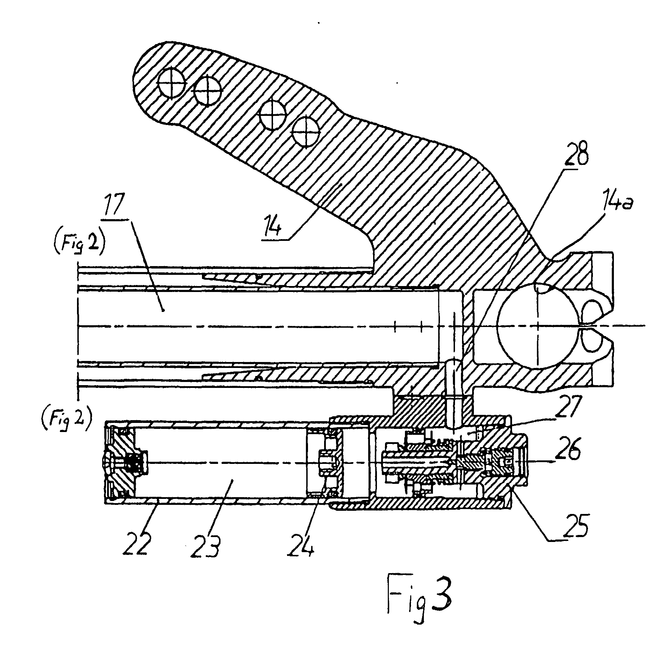

Figures 2 and 3 show, when laid side by side, the basic structure of the respective leg 5 or 6. In Figures 2 and 3, the leg construction has been supplemented by first components, specified below, in order to form a compression leg, i.e. the leg 5 in Figure 1. By providing the basic structure with second components, specified below, instead of the said first components, a return leg is obtained, i.e. the leg 6 according to Figure 1. The basic structure is to a large extent designed in a manner known per se using components known per se and it will therefore only be described where relevant to the invention.

The basic design comprises, inter alia, an outer tube 7 and an inner tube 8 which is mounted so as to be longitudinally displaceable in the outer tube 7. A piston rod 10 is secured to the first end 9 of the leg, and a piston 12 or piston arrangement is secured to the free end 11 of the piston rod. The rod and the piston can be considered as forming parts of a piston/piston rod arrangement 10, 12. The piston rod extends centrally inside the outer tube 7 and centrally into the inner tube 8 in which there is arranged a further inner tube 13, inside which the piston 12 works. The movement of the inner tube 13 is coordinated with the movement of the tube 8, and both tubes 8 and 13 are connected to an attachment point 14 (Figure 3), by means of which the wheel 4 (see Figure 1) is mounted in the leg in a known manner in a bearing recess 14a. A spring 15 is arranged inside the tube 8. The piston rod extends inside the said spring 15, which at one end bears against a tubular stop 16 anchored in the leg end 9.

The piston 12 works in a space 17 in the tube 13, and the piston rod is also mounted so as to be longitudinally displaceable in a bushing 19 which is secured in the inner wall of the tube 13. The piston rod 10 is sealed with respect to the bushing 19 via one or more sealing members 20. The spring 15 bears against the underside of the tube 13 against a flange 21 which can slide along the inner surface of the tube 8. The spring 15 thus forms a return spring for the inner tube 8 (and the tube 13) and seeks to push the inner tube out of the outer tube (towards the right in the figure). The downward spring movement of the inner tube in the outer tube thus takes place counter to the action of the said spring 15.

The outer tube is assigned a pressure chamber unit 22. The pressure chamber unit can be of a type known per se and works with gas/nitrogen gas in a space 23 and a displaceable separator piston 24. Arranged between the space 17 and the chamber 22 there is a control valve unit 25 which can be adjusted from outside by means of manual adjustment members accessible from the outside. The control valve 25 is of a known type used in the range from Öhlins Racing®. The control valve comprises an adjusting screw 26 by means of which bleed through the valve is set, and piston with main passage(s) for the medium between the upper side and underside of the piston and shims and valve functions arranged at the passage(s). The control valve is incorporated as a damping member in accordance with the above, and each leg has its pressure chamber unit with control valve which effects its damping function essentially only in one direction. The space 17 is connected to a space 27 via a channel 28 and the control valve 25 allows working media passage depending on its setting and depending on movements in or on the piston 12. The separator piston 24 separates the gas and working media in a manner known per se. The arrangement means that a closed system is provided for the working medium and that this is at all times pressurized with the pressure chamber both on compression and return. No cavitation and foaming phenomenon can thus occur. The overpressure of the gas/nitrogen gas can be selected at about 6 bar.

Arranged inside the piston rod 10 there is an elongate element (rod) 29 which takes part in the bleed adjustment function and which extends from the said end 9 to the piston arrangement 10. The element can be adjusted from the outside and can be displaced relative to a seat on the piston in order to function as bleed. The leg end 9 is situated at/secured to the chassis and the bleed is thus adjusted from above.

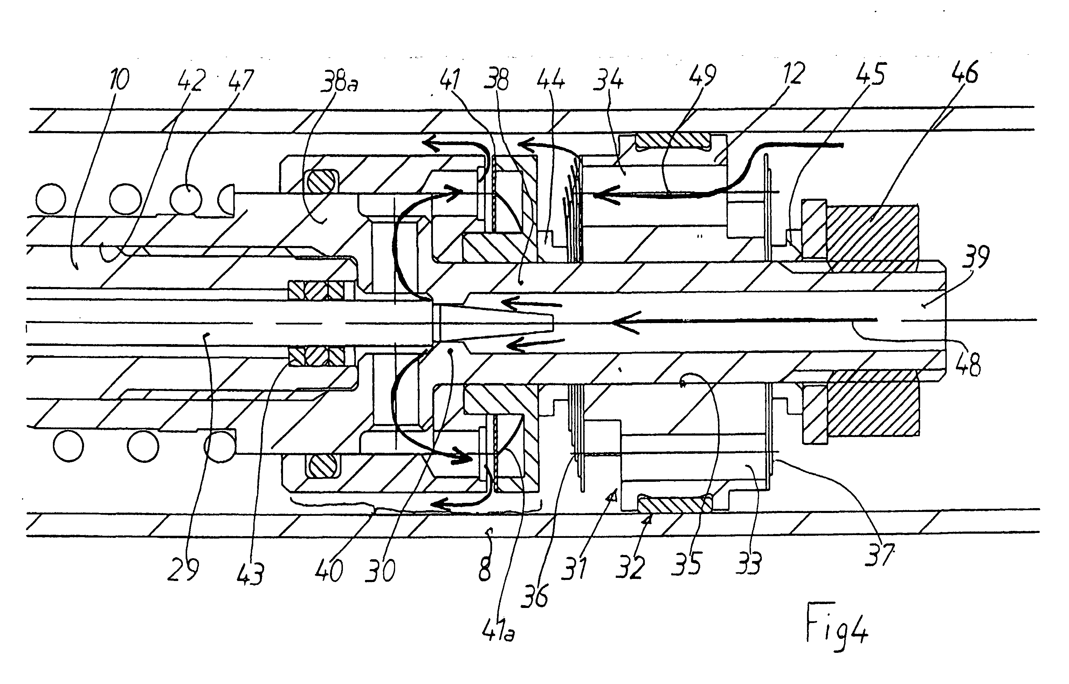

In Figure 4, the bleed function seat is indicated by 30. The element and seat functions 29, 30 can be designed and constructed in a manner known per se, and it will simply be noted here that the element 29 is arranged so as to be longitudinally displaceable relative to the seat depending on manual activation of the leg end 9 of the element. The bleed function can thus be increased or decreased. The components constituting a compression leg comprise a piston rod part 31 with seal 32 and axial through-holes 32, 33, 34, 35. Also included are first shims or shim stack 36 which is/are extremely stiff and second shims/shim stack 37 which is/are extremely weak. Each shim bears directly against the respective end of the piston rod part. A combined connection and bearing part is indicated by 38. The part is designed with the seat 30 and a recess 39 and bears a check valve unit 40. The part 38 has a bearing housing (or bearing housing part) 38a for bearing the front parts of the element 29. A check valve arrangement 41 in the form of a spring washer is also included. The part 38 also has a bearing recess 42 for the front portion of the piston rod 10, and between the piston rod 10 and the element 29 there is a slide bearing 43 for facilitating the rotation during the longitudinal displacement of the element relative to the piston rod upon setting of the bleed function. The part 38 is joined to the piston rod, for example by means of a threaded connection at or in the recess 42. Also included are spacer members (clamping rings) 44 and 45 between the shims/shim stacks and the check valve unit 40, and a securing device 46 which is screwed securely to the end of the part 38. Also included is an impact-damping spring 47 (so-called top-out) arranged on the rear portion of the part 38. A damping device made of elastic material is arranged on parts of the piston rod below the piston in order to prevent metallic impact in the extended position.

Figure 4 shows the passage of the media flow through the piston arrangement on the compression stroke of the compression leg. At low piston speeds, a media flow 48 can pass from the underside of the piston, bleed function 29, 30, radial recesses in the unit 38 and past the check valve 41 which is opened by the flow in question counter to the action of a spring (washer) 41 on the upper side of the piston. At high piston speeds, a direct media passage 49 is also established at the shim/shim stack 36 between the upper side and underside of the piston.

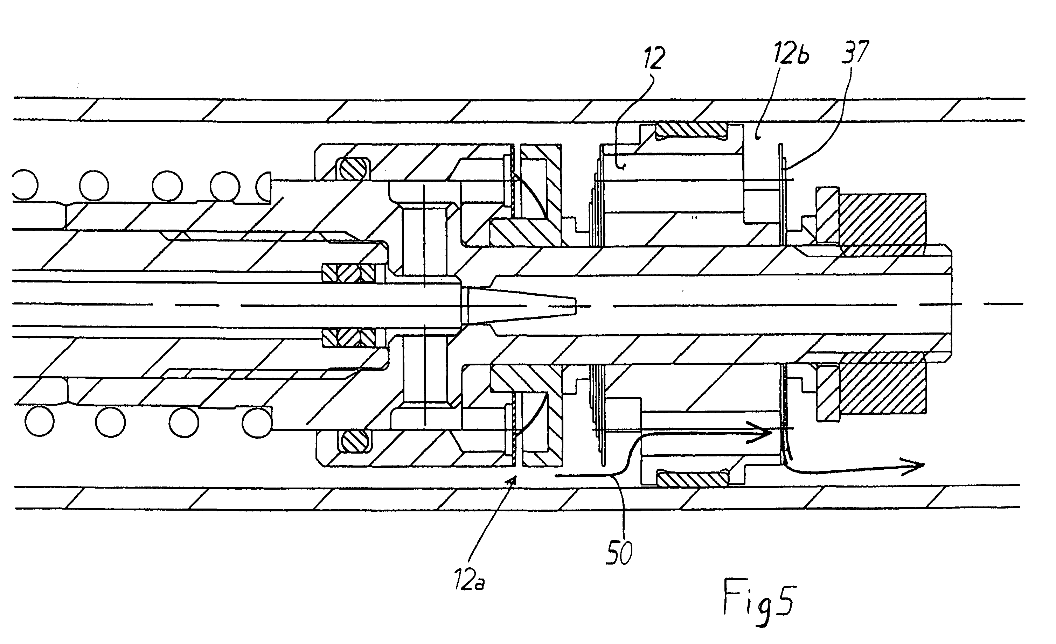

Figure 5 shows the media flow on the return stroke of the compression leg when the medium passes from the upper side 12a of the piston 12 to its underside 12b. The media flow passes the member 37 which works in principle with a check valve function and which, in the illustrative embodiment, preferably consists of one or more shims.

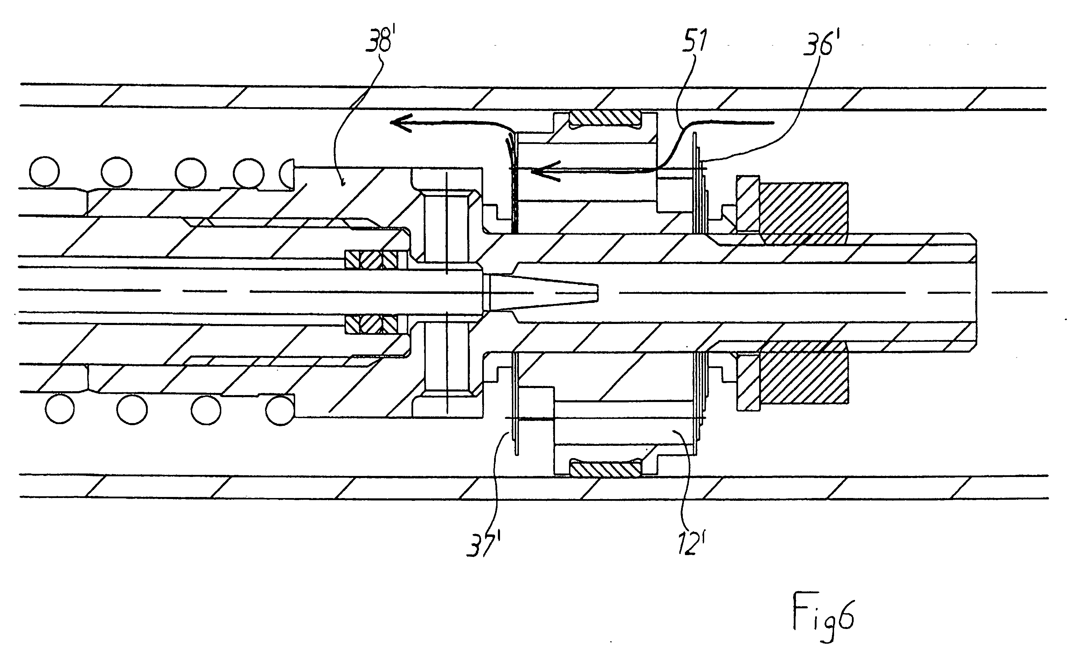

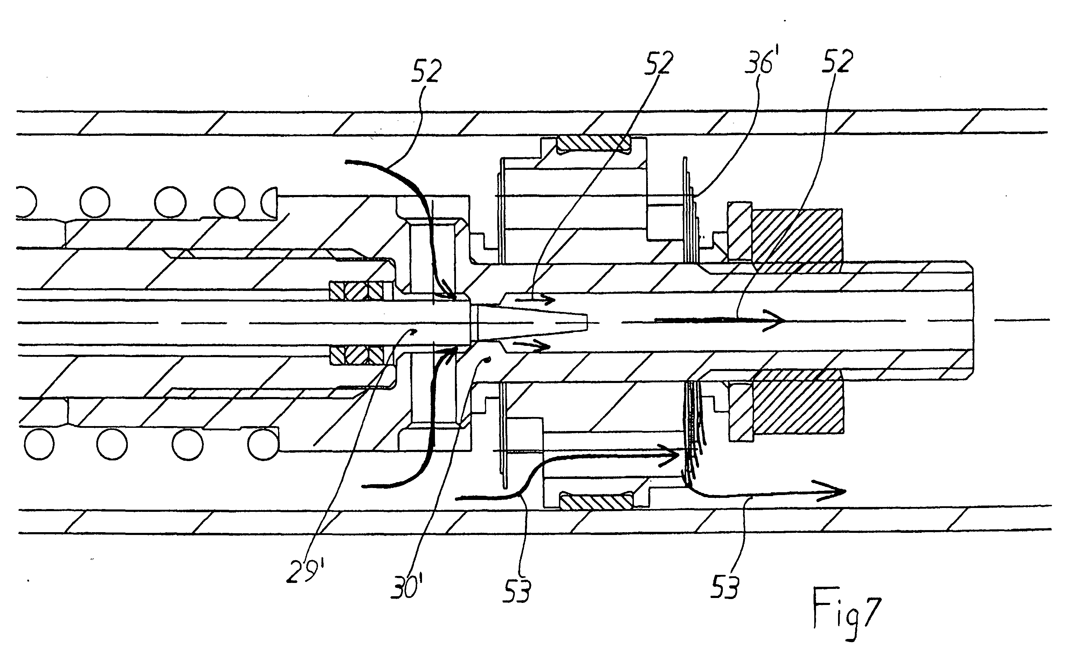

Figures 6 and 7 show the basic design of a leg according to Figures 2 and 3 supplemented with a second component set, giving the basic design the character of a return leg. The second component set has the same structure as the first component set, but with the difference that the check valve arrangement 40 according to Figure 4 is omitted in this case, i.e. the second component set is of simpler construction than the first one. In addition, the shim stacks 36' and 37' on the underside and upper side of the piston 12' have in principle changed places with the shim stacks 36 and 37 of the compression leg, i.e. the weaker shims operating with an almost purely check valve function are located on the upper side of the piston 12' and the stiff shims operating with a damping function are arranged on the underside of the piston.

Figure 6 shows a media flow 51 directly between the underside and upper side of the piston via the check valve function 37' during the compression stroke of the return leg. No damping or very little damping is effected during the compression stroke by virtue of the check valve function and the fact that only a negligible amount of media can pass the rear wall and radial recesses (see above) of the bleed function in part 38'. The functions and structures of the various parts will be evident in this context.

Figure 7 shows the media passage between the upper side and underside of the piston on the return stroke of the return leg when a damping function is to be exerted by the leg. At low media speeds, there is a media passage 52 via the bleed function 29', 30'. At high media speeds, a media passage is also established via the shims/shim stack 36' which exerts a damping function on the said return stroke.

Shims are used preferably in the check valve functions in accordance with the above since they are quick and do not need to operate with distinctive positions. By means of the above, it is easy to adjust the low-speed compression or low-speed return damping from outside, directly on the main piston. The weak and stiff functions of the piston shims provide marked differences in the compression and return legs, which fact facilitates the adjustments of the low-speed compression and low-speed return damping from outside.

The invention is not limited to the above illustrative embodiment, and instead it can be modified within the scope of the attached patent claims. The control valve unit 25 used in the illustrative embodiment could in principle be omitted, although it has been found that it provided an accelerating effect in the telescopic leg arrangement. The valve used has the designation R-1565, which is a valve included in the range according to the above. The control valve unit is of the type which goes by the name of compression valve, i.e. it effects a certain damping upon the compression stroke. This means that a slight damping is also obtained from the valve on the compression stroke of the return leg. However, this slight damping is of minor importance since the main damping in the return leg is effected by its piston 12 or its stiff shim stack. The control valve is used in conventional telescopic leg arrangements where it forms the sole possibility of control in the known arrangement. The control via the bleed 29, 30 in the main piston 12 now constitutes a much more powerful control possibility, simplified by the said marked differences. Assuming a 100% damping function in the compression direction of the compression leg and return direction of the return leg, in a preferred embodiment the damping is only 10% or less in the respective other direction. Figure 5 shows how the legs 5 and 6 and the wheel 4 are arranged in a common arrangement with spacer members 3a, 3b and wheel axle 4. At the leg end 9, the element's action for bleed or leakage flow is effected with a screw movement which is converted in a known manner to longitudinal displacement of the element.

## Claims

1. Telescopic fork arrangement (3) for the front wheel (4) of vehicles, preferably motorcycles, and comprising at least two telescopic legs (5, 6), each having telescopically arranged tubes and, arranged in these, piston and piston-rod arrangements operating in a working medium such as hydraulic oil, **characterized in that** a first telescopic leg (5), here called the compression leg, of the said legs performs a damping function essentially only during its compression movement, and a second telescopic leg (6), here called the return leg, of the said telescopic legs performs a damping function essentially only during its return movement, **in that** at least one of the said compression or return legs is connected to a pressure chamber unit (22) which, in a closed system for the working medium, formed with the respective leg in question, keeps this working medium pressurized, and **in that** a piston (12) in the piston/piston-rod arrangement (10, 12) is provided with or cooperates with one or more members which perform or determine respective damping functions.

2. Telescopic fork arrangement according to Patent Claim 1, **characterized in that** the displacement in the pressurized medium upon each piston and piston-rod movement is dependent on the surface area of the piston (12).

3. Telescopic fork arrangement according to Patent Claim 1 or 2, **characterized in that** a friction caused by the pressurized medium is compensated by increased displacement generated by the piston (12).

4. Telescopic fork arrangement according to Patent Claim 1, 2 or 3, **characterized in that** the compression leg (5 or 6) comprises a check valve unit (40) for a bleed adjustment function, which check valve unit can be activated for low media speeds in the bleed adjustment function on the compression stroke, **in that** the piston (12) of the compression leg has, on its upper side, first media-activating members, preferably first shims (36), of stiff character, permitting media passage (49) at high speeds on the compression stroke, and **in that** the last-mentioned piston (12) has a first check valve function, preferably in the form of second shims (37) which are arranged on the underside of the piston and open for media (50) at low pressure on the return stroke of the compression leg.

5. Telescopic fork arrangement according to Patent Claim 4, **characterized in that** the first check valve function/the second shims (37) are of weak character, and **in that** the stiff and weak characters of the first shims (36) and the second shims (37)/the first check valve function provide a marked difference in damping between the compression stroke and return stroke of the compression leg.

6. Telescopic fork arrangement according to Patent Claim 5, **characterized in that** the marked difference permits simplified adjustability for low-speed compression damping.

7. Telescopic fork arrangement according to any of Patent Claims 3 - 6, **characterized in that** the check valve unit (40) prevents media passage via the bleed adjustment function on the return stroke of the compression leg.

8. Telescopic fork arrangement according to any of the preceding patent claims, **characterized in that** the return leg comprises a bleed adjustment function permitting media passage at low media speeds on the return stroke of the return leg, **in that** the piston of the return leg has, on its underside, second media-activating members (36'), preferably third shims of stiff character, permitting media (53) at high speeds on the return stroke, and **in that** the last-mentioned piston has a second check valve function (37'), preferably in the form of fourth shims arranged on the upper side of the piston and arranged to open for media (52) at low pressure on the compression stroke of the return leg.

9. Telescopic fork arrangement according to any of the preceding patent claims, **characterized in that** the second check valve function/the fourth shims are of weak character (37'), and **in that** the stiff and weak characters of the third shims (36') and the fourth shims (37')/the second check valve function provide a marked difference in damping between the return stroke and compression stroke of the return leg.

10. Telescopic fork arrangement according to Patent Claim 9, **characterized in that** the said marked difference facilitates adjustment of low-speed return damping from outside.

11. Telescopic fork arrangement according to Patent Claim 8, 9 or 10, **characterized in that** the bleed adjustment function (29, 30) allows a negligible part of the medium to pass on the compression stroke of the return leg.

12. Telescopic fork arrangement according to any of the preceding patent claims, **characterized in that** the piston of the compression leg consists of parts which can be joined together and comprise a first piston body part (31) with axially extending through-holes (32, 33, 34, 35), first and second shims (36, 37) which can be applied directly on the ends of the piston body part, and a combined connection and bearing part (38) for the piston body part and comprising a first bearing housing (38a) for internal bearing of front parts of a first element (29) effecting the bleed adjustment function.

13. Telescopic fork arrangement according to any of the preceding patent claims, **characterized in that** the piston of the return leg consists of parts which can be joined together and comprise a second piston body part (31) with axially extending through-holes (32 - 35), third and fourth shims (36', 37') which can be applied directly on the ends of the second piston body part, and a second connection and bearing part (38) for, inter alia, internal bearing of front parts of a second element (29') effecting the bleed adjustment function.

14. Telescopic fork arrangement according to Patent Claim 12 or 13, **characterized in that** the first and second bearing housings (38a) extend a distance into an axial central recess in each of the first and second piston body parts (31).

15. Telescopic fork arrangement according to any of the preceding patent claims, **characterized in that** the arrangement in the compression and return legs (5, 6) effects damping of high frequencies, for example frequencies of between 15 and 25 Hz caused, for example, by vibrations from tyres, road surface, etc.

16. Telescopic fork arrangement according to any of the preceding patent claims, **characterized in that** each leg is connected to an accumulator part (22) which is held in the chamber and which operates with gas/nitrogen gas and separator piston (24) between the working medium and the gas/nitrogen gas.

17. Telescopic fork arrangement according to any of the preceding patent claims, **characterized in that** a control valve unit (25) is arranged between the spaces (17, 23) for the working medium and the gas/separator piston.

18. Telescopic fork arrangement according to any of the preceding patent claims, **characterized in that** the bleed function is adjustable from one of the ends (9, or 14) of the legs, and **in that** the control valve (26) can be controlled via a unit (25) containing the control valve for adjustment of the compression against which the piston/piston-rod arrangement presses.

19. Telescopic fork arrangement according to any of the preceding patent claims, **characterized in that** the response of the damping function is accelerated by the fact that the displacement and force thereof are related to or applied to the piston (12)/piston area.

20. Telescopic fork arrangement according to any of the preceding patent claims, **characterized in that** a basic design is provided for a telescopic leg, **in that** the basic design can be assigned first and second components, **in that** a compression leg (5) is obtained when the first components are added to the basic design, and a return leg (6) is obtained when second components are added to the basic design.

21. Telescopic fork arrangement according to Patent Claim 1, **characterized in that** members (29, 30) located on or at the piston (12) and effecting or determining a damping function can be adjusted from the outside, preferably from or at the upper end (9) of the respective leg.

22. Telescopic fork arrangement according to Patent Claim 1 or 21, **characterized in that** each leg (5, 6) is provided with its own pressure chamber (22) and control valve unit (25) which is arranged to participate in the function, meaning that each leg performs a damping function essentially only in its own actual direction, i.e. compression or return.

23. Telescopic fork arrangement according to Patent Claim 1 or 4, **characterized in that** the return leg is able to work without the check valve unit (40) which is present in the compression leg (6 or 5).

## Patentansprüche

1. Teleskopgabel-Anordnung (3) für das Vorderrad (4) von Fahrzeugen, vorzugsweise Motorräder, welche mindestens zwei Teleskopstreben (5, 6) umfasst, die jeweils teleskopisch angeordnete Rohre aufweisen, und, in diesen angeordnet, Kolben- und Kolbenstangen-Anordnungen, die in einem Arbeitsmedium, wie zum Beispiel Hydrauliköl, arbeiten, **dadurch gekennzeichnet, dass** eine erste Teleskopstrebe (5) dieser Streben, hier Kompressionsstrebe genannt, eine Dämpfungsfunktion im wesentlichen nur während ihrer Kompressionsbewegung ausübt, und eine zweite Teleskopstrebe (6) dieser Teleskopstreben, hier Rücklaufstrebe genannt, eine Dämpfungsfunktion im wesentlichen nur während ihrer Rücklaufbewegung ausübt, dass mindestens eine der Kompressions- oder Rücklaufstreben an eine Druckkammereinheit (22) angeschlossen ist, welche, in einem geschlossenen System für das Arbeitsmedium, das mit der jeweiligen Strebe gebildet wird, dieses Arbeitsmedium unter Druck hält und dass ein Kolben (12) in der Kolben-/Kolbenstangenanordnung (10, 12) eine oder mehrere Elemente aufweist oder mit diesen zusammenwirkt, welche die jeweiligen Dämpfungsfunktionen ausführen oder bestimmen.

2. Teleskopgabel-Anordnung gemäß Patentanspruch 1, **dadurch gekennzeichnet, dass** die Verdrängung im unter Druck stehenden Medium bei jeder Kolben- und Kolbenstangenbewegung von der Oberflächenfläche des Kolbens (12) abhängig ist.

3. Teleskopgabel-Anordnung gemäß Patentanspruch 1 oder 2, **dadurch gekennzeichnet, dass** eine durch das unter Druck stehende Medium verursachte Reibung durch eine stärkere Verdrängung ausgeglichen wird, die durch den Kolben (12) erzeugt wird.

4. Teleskopgabel-Anordnung gemäß Patentanspruch 1, 2 oder 3, **dadurch gekennzeichnet, dass** die Kompressionsstrebe (5 oder 6) eine Rückschlagventil-Einheit (40) für eine Entlüftungsregelungsfunktion umfasst, wobei diese Rückschlagventil-Einheit für niedrige Mediengeschwindigkeiten in der Entlüftungsregelungsfunktion beim Kompressionshub betätigt werden kann, dass der Kolben (12) der Kompressionsstrebe auf seiner Oberseite erste medienbetätigende Elemente aufweist, vorzugsweise erste Ausgleichsscheiben (36) der steifen Art, welche den Mediendurchgang (49) bei hohen Geschwindigkeiten beim Kompressionshub gestatten und dass der zuletzt erwähnte Kolben (12) eine erste Rückschlagventilfunktion hat, vorzugsweise in Form von zweiten Ausgleichsscheiben (37), die auf der Unterseite des Kolbens angeordnet und offen für Medien (50) bei niedrigem Druck beim Rückhub der Kompressionsstrebe sind.

5. Teleskopgabel-Anordnung gemäß Patentanspruch 4, **dadurch gekennzeichnet, dass** die erste Rückschlagventilfunktion/die zweiten Ausgleichsscheiben (37) von schwacher Art sind, und dass die steife und schwache Art der ersten Ausgleichsscheiben (36) und der zweiten Ausgleichsscheiben (37)/erste Rüchschlagventilfunktion für einen deutlichen Unterschied bei der Dämpfung zwischen dem Kompressionshub und dem Rückhub der Kompressionsstrebe sorgen.

6. Teleskopgabel-Anordnung gemäß Patentanspruch 5, **dadurch gekennzeichnet, dass** der deutliche Unterschied eine vereinfachte Einstellbarkeit für Kompressionsdämpfung bei niedriger Geschwindigkeit gestattet.

7. Teleskopgabel-Anordnung gemäß einem der Patentansprüche 3 - 6, **dadurch gekennzeichnet, dass** die Rückschlagventil-Einheit (40) den Mediendurchgang über die Entlüftungsregelungsfunktion beim Rückhub der Kompressionsstrebe verhindert.

8. Teleskopgabel-Anordnung gemäß einem der vorhergehenden Patentansprüche, **dadurch gekennzeichnet, dass** die Rücklaufstrebe eine Entlüftungsregelungsfunktion umfasst, welche den Mediendurchgang bei niedrigen Mediengeschwindigkeiten beim Rückhub der Rücklaufstrebe gestattet, dass der Kolben der Rücklaufstrebe auf seiner Unterseite zweite medienbetätigende Elemente (36'), vorzugsweise dritte Ausgleichsscheiben steifer Art umfasst, welche Medien (53) bei hohen Geschwindigkeiten beim Rückhub zulassen, und dass der zuletzt erwähnte Kolben eine zweite Rückschlagventilfunktion (37') aufweist, vorzugsweise in Form von vierten, auf der Oberseite des Kolbens angeordneten Ausgleichsscheiben, die so angeordnet sind, dass sie sich für Medien (52) bei niedrigem Druck beim Kompressionshub der Rücklaufstrebe öffnen.

9. Teleskopgabel-Anordnung gemäß einem der vorhergehenden Patentansprüche, **dadurch gekennzeichnet, dass** die zweite Rückschlagventilfunktion/die vierten Ausgleichsscheiben schwacher Art sind (37'), und dass die steife und die schwache Art der dritten Ausgleichsscheiben (36') und der vierten Ausgleichsscheiben (37')/die zweite Rückschlagventilfunktion für einen deutlichen Unterschied der Dämpfung zwischen dem Rückhub und dem Kompressionshub der Rücklaufstrebe sorgen.

10. Teleskopgabel-Anordnung gemäß Patentanspruch 9, **dadurch gekennzeichnet, dass** der deutliche Unterschied die Regelung der Dämpfung beim Rücklauf bei niedriger Geschwindigkeit von außen ermöglicht.

11. Teleskopgabel-Anordnung gemäß Patentanspruch 8, 9 oder 10, **dadurch gekennzeichnet, dass** die Entlüftungsregelungsfunktion (29, 30) den Durchgang eines unerheblichen Teils des Mediums beim Kompressionshub der Rücklaufstrebe zuläßt.

12. Teleskopgabel-Anordnung gemäß einem der vorhergehenden Patentansprüche, **dadurch gekennzeichnet, dass** der Kolben der Kompressionsstrebe aus Teilen besteht, die zusammengefügt werden können und einen ersten Kolbenschaft-Teil (31) umfassen, mit sich axial erstreckenden Durchgangslöchern (32, 33, 34, 35), ersten und zweiten Ausgleichsscheiben (36, 37), die direkt auf die Enden des Kolbenschaft-Teils aufgebracht werden können, und einem kombinierten Anschluss- und Lagerteil (38) für den Kolbenschaft-Teil, mit einem ersten Lagergehäuse (38a) für das Innenlager von Vorderteilen eines ersten Elements (29), das die Entlüftungsregelungsfunktion bewirkt.

13. Teleskopgabel-Anordnung gemäß einem der vorhergehenden Patentansprüche, **dadurch gekennzeichnet, dass** der Kolben der Rücklaufstrebe aus Teilen besteht, die zusammengefügt werden können und einen zweiten Kolbenschaft-Teil (31) umfassen, mit sich axial erstreckenden Durchgangslöchern (32 - 35), dritten und vierten Ausgleichsscheiben (36', 37'), die direkt auf die Enden des zweiten Kolbenschaft-Teils aufgebracht werden können, und einem zweiten Anschluss- und Lagerteil (38) für unter anderem das Innenlager von Vorderteilen eines zweiten Elements (29'), das die Entlüftungsregelungsfunktion bewirkt.

14. Teleskopgabel-Anordnung gemäß Patentanspruch 12 oder 13, **dadurch gekennzeichnet, dass** sich das erste und zweite Lagergehäuse (38a) ein Stück in eine axiale mittige Vertiefung jeweils im ersten und zweiten Kolbenschaft-Teil (31) hinein erstrecken.

15. Teleskopgabel-Anordnung gemäß einem der vorhergehenden Patentansprüche, **dadurch gekennzeichnet, dass** die Anordnung in den Kompressions- und Rücklaufstreben (5, 6) eine Dämpfung hoher Frequenzen bewirkt, zum Beispiel von Frequenzen zwischen 15 und 25 Hz, die beispielsweise durch Vibrationen von Reifen, Straßenoberflächen usw. verursacht werden.

16. Teleskopgabel-Anordnung gemäß einem der vorhergehenden Patentansprüche, **dadurch gekennzeichnet, dass** jede Strebe mit einem Akkumulatorteil (22) verbunden ist, der in der Kammer gehalten wird und mit Gas/Stickstoffgas und Separatorkolben (24) zwischen dem Arbeitsmedium und dem Gas/ Stickstoffgas arbeitet.

17. Teleskopgabel-Anordnung gemäß einem der vorhergehenden Patentansprüche, **dadurch gekennzeichnet, dass** eine Steuerventil-Einheit (25) zwischen den Räumen (17, 23) für das Arbeitsmedium und Gas/Separatorkolben angeordnet ist.

18. Teleskopgabel-Anordnung gemäß einem der vorhergehenden Patentansprüche, **dadurch gekennzeichnet, dass** die Entlüftungsfunktion von einem der Enden (9 oder 14) der Streben aus einstellbar ist, und dass das Steuerventil (26) über eine Einheit (25) gesteuert werden kann, welche das Steuerventil für das Einstellen der Kompression enthält, gegen welches die Kolben-/Kolbenstangenanordnung drückt.

19. Teleskopgabel-Anordnung gemäß einem der vorhergehenden Patentansprüche, **dadurch gekennzeichnet, dass** die Reaktion der Dämpfungsfunktion durch die Tatsache beschleunigt wird, dass die Verdrängung und die Kraft derselben sich auf den Kolben (12)/Kolbenbereich beziehen oder auf diese ausgeübt werden.

20. Teleskopgabel-Anordnung gemäß einem der vorhergehenden Patentansprüche, **dadurch gekennzeichnet, dass** eine Grundausführung für eine Teleskopstrebe bereitgestellt wird, dass der Grundausführung erste und zweite Bestandteile zugeordnet werden können, dass eine Kompressionsstrebe (5) erhalten wird, wenn die ersten Bestandteile der Grundausführung hinzugefügt werden, und dass eine Rücklaufstrebe (6) erhalten wird, wenn der Grundausführung zweite Bestandteile hinzugefügt werden.

21. Teleskopgabel-Anordnung gemäß einem der vorhergehenden Patentansprüche, **dadurch gekennzeichnet, dass** Elemente (29, 30), die sich auf oder am Kolben (12) befinden und eine Dämpfungsfunktion bewirken oder bestimmen, von außen eingestellt werden können, vorzugsweise vom oder am oberen Ende (9) der jeweiligen Strebe.

22. Teleskopgabel-Anordnung gemäß einem der Patentansprüche 1 oder 21 , **dadurch gekennzeichnet, dass** jede Strebe (5, 6) ihre eigene Druckkammer (22) und Steuerventil-Einheit (25) aufweist, die so angeordnet ist, dass sie an der Funktion teilnimmt, was bedeutet, dass jede Strebe eine Dämpfungsfunktion im wesentlichen nur in ihrer eigenen tatsächlichen Richtung, das heißt Kompression oder Rücklauf, ausübt.

23. Teleskopgabel-Anordnung gemäß einem der Patentansprüche 1 oder 4, **dadurch gekennzeichnet, dass** die Rücklaufstrebe in der Lage ist, ohne die Rückschlagventil-Einheit (40) zu arbeiten, die bei der Kompressionsstrebe (6 oder 5) vorhanden ist.

## Revendications

1. Agencement de fourche télescopique (3) pour la roue avant (4) de véhicules, de préférence des motos, et comprenant au moins deux jambes télescopiques (5, 6), chacune ayant des tubes agencés télescopiquement et, agencés dans ceux-ci, des agencements de pistons et de tiges de pistons fonctionnant dans un fluide moteur tel que de l'huile hydraulique, **caractérisé en ce qu'**une première jambe télescopique (5), ici dénommée la jambe de compression, desdites jambes exécute une fonction d'amortissement essentiellement uniquement pendant son mouvement de compression, et une seconde jambe télescopique (6), ici dénommée la jambe de retour, desdites jambes télescopiques exécute une fonction d'amortissement essentiellement uniquement pendant son mouvement de retour, **en ce qu'**au moins une desdites jambes de compression ou de retour est reliée à une unité de chambre de refoulement (22) qui, dans un système fermé pour le fluide moteur, formé avec la jambe respective en question, conserve ce fluide moteur sous pression, et **en ce qu'**un piston (12) dans l'agencement piston/tige de piston (10, 12) est muni de ou coopère avec un ou plusieurs éléments qui exécutent ou déterminent les fonctions respectives d'amortissement.

2. Agencement de fourche télescopique selon la revendication 1, **caractérisé en ce que** le déplacement dans le fluide sous pression lors du mouvement de chaque piston et de chaque tige de piston dépend de la superficie du piston (12).

3. Agencement de fourche télescopique selon la revendication 1 ou 2, **caractérisé en ce qu'**un frottement provoqué par le fluide sous pression est compensé par un déplacement accru généré par le piston (12).

4. Agencement de fourche télescopique selon la revendication 1, 2 ou 3, **caractérisé en ce que** la jambe de compression (5 ou 6) comprend une unité de clapet (40) pour une fonction de réglage de purge, laquelle unité de clapet peut être actionnée pour des vitesses de fluides faibles dans la fonction de réglage de purge sur la course de compression, **en ce que** le piston (12) de la jambe de compression, présente, sur son côté supérieur, des premiers éléments d'actionnement des fluides, de préférence des premières cales (36) de caractère rigide, permettant le passage des fluides (49) à grande vitesse sur la course de compression et **en ce que** le piston mentionné en dernier (12) a une première fonction de clapet, de préférence sous la forme de deuxièmes cales (37) qui sont agencées sur la sous-face du piston et ouvertes aux fluides (50) à basse pression sur la course de retour de la jambe de compression.

5. Agencement de fourche télescopique selon la revendication 4, **caractérisé en ce que** la première fonction de clapet/les deuxièmes cales (37) sont de caractère faible, et **en ce que** les caractères rigides et faibles des premières cales (36) et des deuxièmes cales (37)/la première fonction de clapet offrent une différence marquée dans l'amortissement entre la course de compression et la course de retour de la jambe de compression.

6. Agencement de fourche télescopique selon la revendication 5, **caractérisé en ce que** la différence marquée permet une capacité de réglage simplifiée pour l'amortissement de compression à basse vitesse.

7. Agencement de fourche télescopique selon l'une quelconque des revendications 3 à 6, **caractérisé en ce que** l'unité de clapet (40) empêche le passage des fluides par l'intermédiaire de la fonction de réglage de purge sur la course de retour de la jambe de compression.

8. Agencement de fourche télescopique selon l'une quelconque des revendications qui précèdent, **caractérisé en ce que** la jambe de retour comprend une fonction de réglage de purge permettant un passage des fluides à de faibles vitesses de fluides sur la course de retour de la jambe de retour, **en ce que** le piston de la jambe de retour présente, sur sa sous-face, des seconds éléments d'actionnement de fluides (36'), de préférence des troisièmes cales de caractère rigide, permettant des fluides (53) à grande vitesse sur la course de retour, et **en ce que** le piston mentionné en dernier présente une seconde fonction de clapet (37'), de préférence sous la forme de quatrièmes cales agencées sur le côté supérieur du piston et agencées pour s'ouvrir aux fluides (52) à basse pression sur la fourche de compression de la jambe de retour.

9. Agencement de fourche télescopique selon l'une quelconque des revendications qui précèdent, **caractérisé en ce que** la seconde fonction de clapet/les quatrièmes cales sont de caractère faible (37'), et **en ce que** les caractères rigides et faibles des troisièmes cales (36') et des quatrièmes cales (37')/la seconde fonction de clapet offrent une différence marquée dans l'amortissement entre la course de retour et la course de compression de la jambe de retour.

10. Agencement de fourche télescopique selon la revendication 9, **caractérisé en ce que** ladite différence marquée facilite le réglage de l'amortissement à faible vitesse depuis l'extérieur.

11. Agencement de fourche télescopique selon la revendication 8, 9 ou 10, **caractérisé en ce que** la fonction de réglage de purge (29, 30) permet à une partie négligeable des fluides de passer sur la course de compression de la jambe de retour.

12. Agencement de fourche télescopique selon l'une quelconque des revendications qui précèdent, **caractérisé en ce que** le piston de la jambe de compression consiste en parties qui peuvent être jointes et comprend une première partie de jupe de piston (31) avec des trous débouchants s'étendant axialement (32, 33, 34, 35), des premières et des deuxièmes cales (36, 37) qui peuvent s'appliquer directement sur les extrémités de la partie de jupe de piston, et une partie combinée de connexion et de palier (38) pour la partie de jupe de piston et comprenant un premier corps de palier (38a) pour un palier interne des parties avants d'un premier élément (29) effectuant la fonction de réglage de purge.

13. Agencement de fourche télescopique selon l'une quelconque des revendications qui précèdent, **caractérisé en ce que** le piston de la jambe de retour consiste en parties qui peuvent être jointes et comprend une seconde partie de jupe de piston (31) avec des trous débouchants s'étendant axialement (32 à 35), des troisièmes et quatrièmes cales (36', 37') qui peuvent s'appliquer directement sur les extrémités de la seconde partie de jupe de piston, et une seconde partie de connexion et de palier (38), pour, entre autres, qu'un palier interne des parties avants d'un second élément (29') effectue la fonction de réglage de purge.

14. Agencement de fourche télescopique selon la revendication 12 ou 13, **caractérisé en ce que** les premier et second corps de palier (38a) s'étendent sur une distance à l'intérieur d'un encastrement central axial dans chacune des première et seconde parties de jupe de piston (31).

15. Agencement de fourche télescopique selon l'une quelconque des revendications qui précèdent, **caractérisé en ce que** l'agencement dans les jambes de compression et de retour (5, 6) effectue un amortissement de hautes fréquences, par exemple des fréquences entre 15 et 25 Hz provoquées, par exemple, par des vibrations provenant des pneus, de la surface de la route, etc.

16. Agencement de fourche télescopique selon l'une quelconque des revendications qui précèdent, **caractérisé en ce que** chaque jambe est reliée à une partie d'accumulateur (22) qui est maintenue dans la chambre et qui fonctionne avec du gaz/de l'azote et un piston séparateur (24) entre le fluide moteur et le gaz/l'azote.

17. Agencement de fourche télescopique selon l'une quelconque des revendications qui précèdent, **caractérisé en ce qu'**une unité de robinet de réglage (25) est agencée entre les espaces (17, 23) pour le fluide moteur et le gaz/piston séparateur.

18. Agencement de fourche télescopique selon l'une quelconque des revendications qui précèdent, **caractérisé en ce,que** la fonction de purge est réglable depuis une des extrémités (9 ou 14) des jambes, et **en ce que** le robinet de réglage (26) peut être commandé par l'intermédiaire d'une unité (25) contenant le robinet de réglage pour ajustement de la compression contre lequel se presse l'agencement piston/tige de piston.

19. Agencement de fourche télescopique selon l'une quelconque des revendications qui précèdent, **caractérisé en ce que** la réponse de la fonction d'amortissement est accélérée par le fait que le déplacement et la force de celui-ci sont associés ou appliqués au piston (12)/la surface du piston.

20. Agencement de fourche télescopique selon l'une quelconque des revendications qui précèdent, **caractérisé en ce qu'**une conception de base est prévue pour une jambe télescopique, **en ce que** la conception de base peut se voir affecter des premiers et seconds composants, **en ce qu'**une jambe de compression (5) est obtenue quand les premiers composants sont ajoutés à la conception de base et une jambe de retour (6) est obtenue quand les seconds composants sont ajoutés à la conception de base.

21. Agencement de fourche télescopique selon la revendication 1, **caractérisé en ce que** des éléments (29, 30) situés sur ou au niveau du piston (12) et effectuant ou déterminant une fonction d'amortissement peuvent être réglés depuis l'extérieur, de préférence depuis ou au niveau de l'extrémité supérieure (9) de la jambe respective.

22. Agencement de fourche télescopique selon la revendication 1 ou 21, **caractérisé en ce que** chaque jambe (5, 6) est munie de sa propre chambre de refoulement (22) et unité de robinet de réglage (25) qui est agencée pour participer à la fonction, signifiant que chaque jambe exécute une fonction d'amortissement essentiellement uniquement dans sa propre direction réelle, c'est-à-dire la compression ou le retour.

23. Agencement de fourche télescopique selon la revendication 1 ou 4, **caractérisé en ce que** la jambe de retour est capable de fonctionner sans l'unité de clapet (40) qui est présente dans la jambe de compression (6 ou 5).
